# EUROPÄISCHE PATENTSCHRIFT

(11) **EP 2 954 256 B1**
(45) Veröffentlichungstag und Bekanntmachung des Hinweises auf die Patenterteilung: **20.07.2016**
(21) Anmeldenummer: 14706268.1
(22) Anmeldetag: 21.01.2014
(51) Int. Cl.: F21S 8/10, F21Y 101/00

(54) **SCHEINWERFER FÜR EIN KRAFTFAHRZEUG UND VERFAHREN ZUM ERZEUGEN EINER LICHTVERTEILUNG**
HEADLIGHT FOR A MOTOR VEHICLE AND METHOD FOR DISTRIBUTING LIGHT
PROJECTEUR POUR UN VÉHICULE À MOTEUR ET PROCEDE DE DIFFUSION DE LUMIÈRE

(30) Priorität: 07.02.2013 AT 992013; 24.09.2013 AT 506142013
(43) Veröffentlichungstag der Anmeldung: 16.12.2015
(73) Patentinhaber: Zizala Lichtsysteme GmbH, 3250 Wieselburg (AT)
(72) Erfinder: REINPRECHT, Markus, 3250 Wieselburg (AT); BAUER, Friedrich, 3252 Bergland (AT)
(74) Vertreter: Patentanwaltskanzlei Matschnig & Forsthuber OG
(86) Internationale Anmeldenummer: PCT/AT2014/050020
(87) Internationale Veröffentlichungsnummer: WO 2014/121314

(56) Entgegenhaltungen:
- EP-A2- 2 537 708
- DE-A1-102008 022 795
- DE-A1-102009 025 678
- DE-A1-102010 028 949
- JP-A- 2013 012 411
- US-A1- 2009 046 474
- US-A1- 2011 249 460
- US-A1- 2012 051 074

## Beschreibung

Die Erfindung bezieht sich auf ein Verfahren zum Erzeugen einer vorgegebenen Lichtverteilung mit Hilfe eines KFZ-Scheinwerfers auf einer Fahrbahn, bei welchem zumindest ein modulierter Laserstrahl über einen verschwenkbaren Mikrospiegel auf ein Lichtkonversionsmittel gelenkt wird und das an dem Lichtkonversionsmittel erzeugte Leuchtbild auf die Fahrbahn projiziert wird.

Ebenso bezieht sich die Erfindung auf einen Scheinwerfer für Kraftfahrzeuge mit zumindest einer modulierbaren Laserlichtquelle, deren Laserstrahl über einen verschwenkbaren, über eine Spiegelansteuerung angesteuerten Mikrospiegel auf ein Lichtkonversionsmittel gelenkt wird und mit einem Projektionssystem zur Projektion des an dem Lichtkonversionsmittel erzeugten Leuchtbildes auf die Fahrbahn.

Der Einsatz von Laserlichtquellen in Kraftfahrzeugen gewinnt derzeit an Bedeutung, da z.B. die Abmessungen von Laserdioden verglichen mit üblichen Leuchtdioden kleiner sind, was flexiblere und effizientere Einbaulösungen ermöglich, und auch die Leuchtdichte des Lichtbündels sowie die Lichtausbeute erheblich gesteigert werden kann.

Bei den bekannten Lösungen wird allerdings kein direkter Laserstrahl emittiert, um eine Gefährdung der Augen von Menschen und anderen Lebewesen durch den extrem gebündelten Lichtstrahl hoher Leistung zu vermeiden. Der Laserstrahl wird vielmehr auf einen zwischengeschalteten Konverter, der ein Lumineszenzkonversionsmaterial, kurz "Phosphor" genannt, enthält, von z.B. blauem Licht in vorzugsweise "weißes" Licht umgewandelt.

Aus der EP 2 063 170 A2 ist ein Scheinwerfer für Kraftfahrzeuge der eingangs genannten Artbekannt geworden, bei welchem zur Ausleuchtung der Fahrbahn mit einem blendfreien adaptiven Fernlicht bestimmte Bereiche in Abhängigkeit von anderen Verkehrsteilnehmern ausgespart werden können. Der Strahl eines Lasers wird über einen in zumindest zwei Raumrichtungen bewegbaren Mikrospiegel auf eine Leuchtfläche gelenkt, die zur Konvertierung des Laserlichtes in vorzugsweise weißes Licht einen Phosphor enthält. Mittels einer Linse wird das Leuchtbild der Leuchtfläche auf die Fahrbahn projiziert. Da der Mikrospiegel einen konzentrischen Laserstrahl ablenken muss, ist er einer entsprechend hohen spezifischen Flächenbelastung ausgesetzt, wodurch seine Konstruktion teurer wird.

Die DE 10 2008 022 795 A1 offenbart einen KFZ-Scheinwerfer, bei welchem die Strahlen dreier Halbleiterlaser der Farben Rot, Grün, Blau durch eine achromatische Linse zu einem weißen Strahl vereinigt werden, der auf eine um zwei Achsen schwingenden Spiegel trifft. Eine Steuervorrichtung moduliert die Strahlleistung derart, dass vorgegebene Bereiche des Spiegels mit vorgegebener Leistung angestrahlt werden. Der Spiegel kann bei einer Ausführungsform eine Beschichtung mit einem Konvertermaterial aufweisen. Bei einer anderen Ausführung ist ein angesteuertes Mikrospiegelarray vorgesehen. Ein Laserstrahl trifft dabei auf einen Diffusor, der zugleich lichtkonvertierend ausgeführt ist, und welcher das Mikrospiegelarray ausleuchtet. Über eine Projektionsoptik kann das durch das Spiegelarray erzeugte gewünschte Bild auf die Fahrbahn projiziert werden.

Aus US2011/0249460A1 ist ein gattungsgemäßes Verfahren gemäß Anspruch 1 bzw. ein gattungsgemäßer Scheinwerfer gemäß Anspruch 6 bekannt.

Ganz allgemein besteht der Wunsch nach mehr Funktionalitäten für adaptive Scheinwerfersysteme (AFS = Adaptive Frontlighting Systems) mit hoher Auflösung und kurzen Reaktionszeiten. Die bekannten Vorrichtungen sind jedoch entweder in ihrer Komplexität sehr hoch oder zeigen Auflösungsprobleme in zumindest einer, meist in horizontaler Richtung. Dies gilt auch für Scheinwerfer, die zur Ausleuchtung eine LED-Matrix verwenden, wobei wahlweise Segmente der Matrix ein- oder ausgeschaltet werden können. Hier liegt die Auflösung in günstigen Fällen bei 1,5°.

Eine Aufgabe der Erfindung besteht in der Schaffung eines Verfahrens bzw. eines Scheinwerfers der gegenständlichen Art, der ohne hochkomplexen Aufbau eine verbesserte Auflösung in horizontale Richtung aufweist und den oben genannten Anforderungen an AFS-Funktionen entgegenkommt.

Diese Aufgabe wird mit einem Verfahren der eingangs genannten Art gelöst, bei welchem erfindungsgemäß die Laserstrahlen zumindest zweier Laserlichtquellen mit vorgegebenem Strahlquerschnitt über den um eine Achse schwingenden Mikrospiegel zur Erzeugung von zumindest zwei an dem Lichtkonversionsmittel aneinander liegender Lichtbänder auf das Lichtkonversionsmittel gelenkt werden.

Die Funktionalität eines Scheinwerfers kann beträchtlich erhöht werden, falls der Laserstrahl zumindest einer Laserlichtquelle zu einem Strahlenband aufgefächert wird.

Weiters ist es zweckmäßig, wenn die Länge der Lichtbänder über die Schwingungsamplitude des Mikrospiegels eingestellt wird.

Besonders vorteilhaft ist es, wenn durch Strahlformungsoptiken und/oder die Wahl des Abstands der Leuchtfläche von den Brennpunkten dieser Optiken Form und Größe der an dem Lichtkonversionsmittel erzeugten Projektionen bestimmt wird.

Zur Lösung der genannten Aufgabe kann weiters ein Scheinwerfer der oben angegebenen Art herangezogen werden, bei welchem erfindungsgemäß zumindest zwei Laserlichtquellen vorgesehen sind, welchen eine Laseransteuerung zum Modulieren der Strahlintensität zugeordnet ist, zwischen jeder Laserlichtquelle und dem Mikrospiegel eine Optik zur Formung je eines Laserstrahls mit vorgegebenem Strahlquerschnitt angeordnet ist, der Mikrospiegel mit fester Frequenz um eine Achse schwingt, wobei die Strahlen der zumindest zwei Laserlichtquellen zur Bildung zumindest zweier aneinander liegender Lichtbänder an dem Lichtkonversionsmittel über den Mikrospiegel umgelenkt sind, wobei der Abstand der Lichtbänder voneinander durch den gegenseitigen Winkel der geformten Laserstrahlen der zumindest zwei Laserlichtquellen festgelegt, die Länge der Lichtbänder an dem Lichtkonversionsmittel durch die Schwingungsamplitude des Mikrospiegels und die Breite der Lichtbänder durch den Strahlquerschnitt bestimmt ist.

Um ein Leuchtbild ohne störende dunkle Streifen zu erhalten, ist es empfehlenswert, dass die Lichtbänder unmittelbar, ohne Abstand aneinander anschließen.

Vorteilhaft ist es, wenn der Mikrospiegel über die Spiegelansteuerung mit seiner mechanischen Eigenfrequenz angesteuert wird.

Bei einer zweckmäßigen Ausgestaltungkann weiters vorgesehen sein, dass die Verschwenkamplitude des Mikrospiegels über die Spiegelansteuerung änderbar ist.

Eine praxisgerechte Weiterbildung der Erfindung sieht vor, dass die aufgefächerten Strahlen der zumindest zwei Laserlichtquellen zur Bildung von zumindest zwei übereinanderliegenden horizontalen Lichtbändern an dem Lichtkonversionsmittel über den Mikrospiegel umgelenkt sind.

Dabei ergibt sich eine vorteilhafte Variante, wenn drei Laserlichtquellen zur Bildung von drei übereinander liegenden Lichtbändern auf der Leuchtfläche vorgesehen sind, wobei die auf die Fahrbahn projizierten Lichtbänder des Leuchtbildes einem Fernlicht, der Hell-Dunkel-Grenze und einem Abblendlicht entsprechen können.

Vorteilhafterweise können die Lichtbänder unterschiedliche Höhe aufweisen, um beispielsweise die vertikale Auflösung im Fernlichtbereich zu erhöhen.

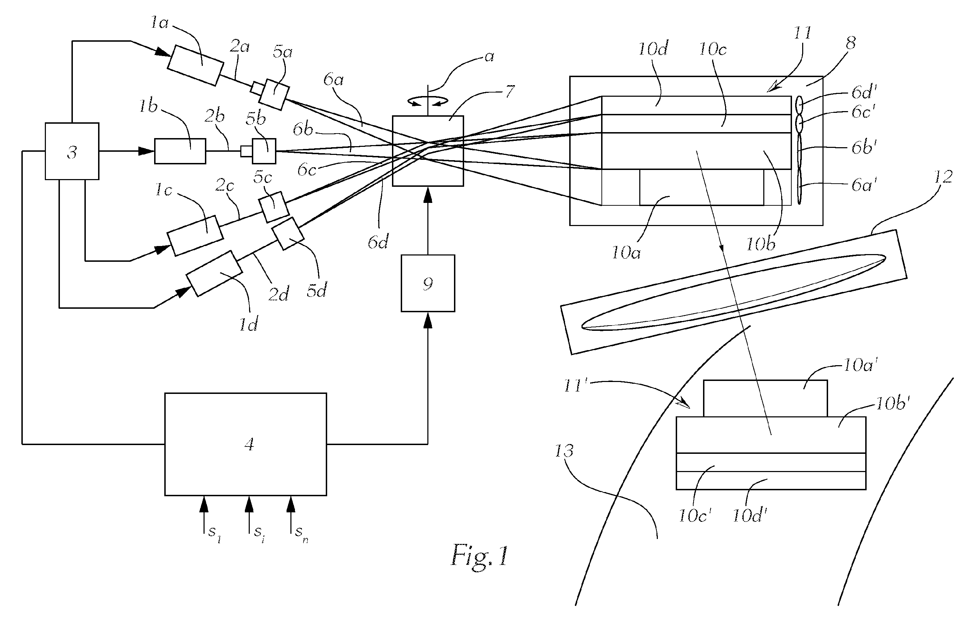

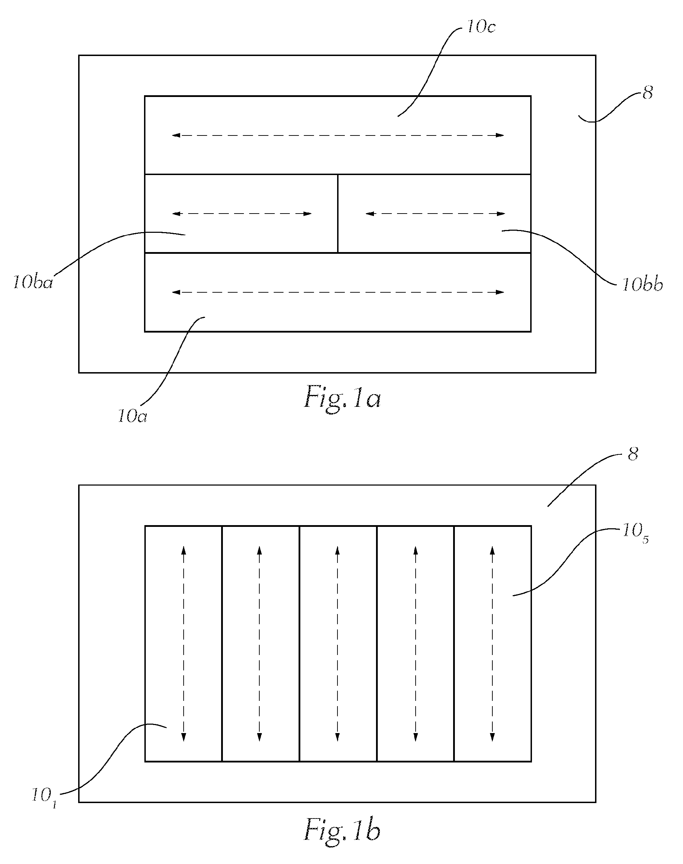

Die Erfindung samt weiteren Vorteilen ist im Folgenden an Hand beispielsweiser Ausführungsformen näher erläutert, die in der Zeichnung veranschaulicht sind. In dieser zeigt
Fig. 1 die für die Erfindung wesentlichen Komponenten eines Scheinwerfers und deren Zusammenhang in einer schematischen Darstellung und
Fig. 1a und b weitere Möglichkeiten einer Ausleuchtung der Leuchtfläche eines Scheinwerfers nach der Erfindung.

Unter Bezugnahme auf Fig. 1 wird nun ein Ausführungsbeispiel der Erfindung näher erläutert. Insbesondere sind die für einen erfindungsgemäßen Scheinwerfer wichtigen Teile dargestellt, wobei es klar ist, dass ein KFZ-Scheinwerfer noch viele andere Teile enthält, die seinen sinnvollen Einsatz in einem Kraftfahrzeug, wie insbesondere einem PKW oder Motorrad, ermöglichen. Lichttechnischer Ausgangspunkt des Scheinwerfers sind vier Laserlichtquellen 1a, 1b, 1c und 1d, die je einen Laserstrahl abgeben, der mit 2a, 2b, 2c und 2d bezeichnet ist, und welcher eine Laseransteuerung 3 zugeordnet ist, wobei diese Ansteuerung 3 zur Stromversorgung dient und auch zum Modulieren der Strahlintensität der einzelnen Laser eingerichtet ist. Unter "Modulieren" wird in Zusammenhang mit der vorliegenden Erfindung verstanden, dass die Intensität einer Laserlichtquelle geändert werden kann, sei es kontinuierlich oder gepulst, im Sinne eine Ein- und Ausschaltens. Wesentlich ist, dass die Lichtleistung analog dynamisch geändert werden kann, je nachdem, an welcher Winkelposition ein später näher beschriebener Spiegel steht. Zusätzlich gibt es noch die Möglichkeit des Ein und Ausschaltens für eine gewisse Zeit, um definierte Stellen nicht zu beleuchten.

Die Laseransteuerung 3 enthält ihrerseits wiederum Signale von einer zentralen Scheinwerferansteuerung 4, welcher Sensorsignale s1 ... si ... sn zugeführt werden können. Diese Steuer- und Sensorsignale können einerseits beispielsweise Schaltbefehle zum Umschalten von Fernlicht auf Abblendlicht sein oder andererseits Signale, die von Lichtsensoren aufgenommen werden, welche die Beleuchtungsverhältnisse auf der Fahrbahn erfassen.

Die Laserlichtquellen 1a, 1b, 1c, 1d geben beispielsweise blaues oder UV-Licht ab, wobei den Laserlichtquellen je eine Optik 5a, 5b, 5c, 5d nachgeordnet ist, um den Querschnitten des von den Laserlichtquellen abgegebenen Laserstrahlen 2a, 2b, 2c, 2d eine gewünschte Form zu verleihen. Die Optiken 5a, 5b sind Aufweitungsoptiken, wobei eine solche Aufweitungsoptik insbesondere aus einer eigentlichen Aufweitungsoptik, wie sie auf dem Gebiet der Holografie zum breiten Aufweiten eines Laserstrahls bekannt ist, und andererseits aus einem der eigentlichen Aufweitungsoptik vorgeschalteten Lichtbandvorsatz besteht. Optiken zur Strahlformung von Laserstrahlen sind bekannt und im Handel erhältlich, beispielsweise die Linos Laseroptiken der Qioptiq Group, deren Lieferprogramm Lichtbandvorsätze für Laseraufweitungsoptiken umfasst. Nach den Aufweitungsoptiken 5a, 5b liegen aufgefächerte Laserstrahlen 6a, 6b vor, deren Querschnitt nicht "punktförmig", sondern "strichförmig".

Die Optiken 5c, 5d für die Laserstrahlen 2c, 2d sind hingegen übliche Sammel- bzw. Streuoptiken, da die nach diesen Optiken 5c, 5d vorliegenden Laserstrahlen 6c, 6d an ihrem Auftreffort "Spots" erzeugen sollen, nicht jedoch "Striche".

Die geformten Laserstrahlen 6a, 6b, 6c, 6d treffen auf einen Mikrospiegel 7 und werden auf ein im vorliegenden Beispiel als Leuchtfläche ausgebildetes Lichtkonversionsmittel 8 reflektiert, welche z.B. in bekannter Weise einen Phosphor zur Lichtkonversion aufweist. Der Phosphor wandelt beispielsweise blaues oder UV-Licht in "weißes" Licht um. Unter "Phosphor" wird in Zusammenhang mit der vorliegenden Erfindung ganz allgemein ein Stoff oder eine Stoffmischung verstanden, welche Licht einer Wellenlänge in Licht einer anderen Wellenlänge oder eines Wellenlängengemisches, insbesondere in "weißes" Licht, umwandelt, was unter dem Begriff "Wellenlängenkonversion" subsumierbar ist. Dabei wird unter "weißes Licht" Licht einer solchen Spektralzusammensetzung verstanden, welches beim Menschen den Farbeindruck "weiß" hervorruft. Der Begriff "Licht" ist natürlich nicht auf für das menschliche Auge sichtbare Strahlung eingeschränkt. Für das Lichtkonversionsmittel kommen auch Optokeramiken in Frage, das sind transparente Keramiken, wie beispielsweise YAG-Ce (ein Yttrium-Aluminium-Granat mit Cer dotiert).

Der um lediglich eine einzige Achse a schwingende Mikrospiegel 7 wird von einer Spiegelansteuerung 9 angesteuert und in Schwingungen konstanter Frequenz versetzt, wobei diese Schwingungen insbesondere der mechanischen Eigenfrequenz des Mikrospiegels entsprechen können. Auch die Spiegelansteuerung 9 wird ihrerseits von der Scheinwerferansteuerung 4 gesteuert, um die Schwingungsamplitude des Mikrospiegels 7 einstellen zu können, wobei auch asymmetrisches Schwingen um die Achse a einstellbar sein kann. Die Ansteuerung von Mikrospiegeln ist bekannt und kann auf vielerlei Art erfolgen, z.B. elektrostatisch oder elektrodynamisch. Bei erprobten Ausführungsformen der Erfindung schwingt der Mikrospiegel 7 beispielsweise mit einer Frequenz von einigen hundert Hz und sein maximaler Ausschlag beträgt in Abhängigkeit von seiner Ansteuerung einige wenige Grad bis 60°. Die Position des Mikrospiegels 7 wird zweckmäßigerweise an die Spiegelansteuerung 9 und/ oder an die Scheinwerferansteuerung 4 rückgemeldet.

Die geformten Laserstrahlen 6a, 6b, 6c, 6d erzeugen an dem Lichtkonversionsmittel 8, nämlich auf der Leuchtfläche 8, die im Allgemeinen eben ist, jedoch nicht eben sein muss, horizontale Lichtbänder 10d, 10c, 10b, 10a, wobei der Winkel der Laserlichtquellen 1a, 1b, 1c, 1d bezüglich des Mikrospiegels 7 so eingestellt ist, dass die Lichtbänder auf der Leuchtfläche übereinanderliegen und aneinander angrenzen, wobei der Abstand der Lichtbänder voneinander bevorzugt Null ist. Dies kann durch entsprechendes Justieren der Laserlichtquellen 1a, 1b, 1c, 1d genau eingestellt werden und auf der Leuchtfläche entsteht ein Leuchtbild 11, das aus den Lichtbändern, im vorliegenden Fall vier Lichtbändern 10a, 10b, 10c und 10d, zusammengesetzt ist. Dieses Leuchtbild 11 wird nun mit einem Projektionssystem 12 als Leuchtbild 11' auf die Fahrbahn 13 projiziert. Die Verwendung von nur drei Laserlichtquellen zur Bildung von drei auf die Fahrbahn projizierten Lichtbändern ist beispielsweise gleichfalls möglich, da diese Lichtbänder dann einem Fernlicht, der Hell-Dunkel-Grenze und einem Abblendlicht (Vorfeldlicht) entsprechen können.

Rechts von dem symbolisch dargestellten Lichtkonversionsmittel 8, nämlich der Leuchtfläche, sind schematisch die Projektionen dargestellt, die man bei stillstehendem Spiegel 7 sehen würde und die dem jeweiligen Laserstrahlquerschnitt an dieser Stelle entsprechen. Die Laserstrahlen 6c, 6d erzeugen als Projektionen "Spots" 6d', 6c', wobei die Größe der Spots insbesondere durch die Lage der Leuchtfläche und des Mikrospiegels 7 bezüglich der Optiken 5c, 5d festgelegt werden.

Es soll auch darauf hingewiesen werden, in der Zeichnung je zwei Lichtbänder, nämlich 10a, 10b bzw. 10c, 10d, gleich hoch gezeichnet sind, dass jedoch die einzelnen "Striche" 6b', 6a' bzw. 6d', 6c' in der Praxis nicht gleich "hoch" sind. Beispielsweise kann das Lichtband für Fernlicht "höher" als jenes für Abblendlicht oder für die Hell-Dunkel-Grenze sein, deren Abmessung in Höhenrichtung am geringsten ist. Bei einer Änderung der Höhe einzelner Lichtbänder muss selbstverständlich auch der Winkel der Laser bzw. Laserstrahlen zueinander geändert werden, um wieder den Abstand zwischen den Lichtbändern gleich Null zu machen.

Der Begriff "Fahrbahn" wird hier zur vereinfachten Darstellung verwendet, denn selbstverständlich hängt es von den örtlichen Gegebenheiten ab, ob sich das Bild 11' tatsächlich auf der Fahrbahn befindet oder auch darüber hinaus erstreckt. Prinzipiell entspricht das Bild 11' einer Projektion auf eine vertikale Fläche entsprechend der einschlägigen Normen, die sich auf die KFZ-Beleuchtungstechnik beziehen. Es soll weiters klar sein, dass der Begriff "horizontal" hier in einer relativen Bedeutung zu verstehen ist und sich auf eine ebene Fahrbahn bzw. auf eine Normallage des Fahrzeugs bezieht. Im Prinzip sollen die Lichtbänder 10a', 10b' und 10c' des auf die Fahrbahn 13 projizierten Bildes 11' im Wesentlichen aber nicht notwendigerweise horizontal sein, was umso mehr für die Lichtbänder 10a, 10b, 10c auf der Leuchtfläche 8 gilt.

Es ist nun ersichtlich, dass das Leuchtbild 11 und damit auch die Fahrbahnausleuchtung 11' einerseits durch das Einstellen der Schwingungsamplitude des Mikrospiegels 7 geändert werden kann, wodurch sich die Länge der horizontalen Lichtbänder 10a, 10b, 10c, 10d ändert und durch Einstellen der Intensität der einzelnen Laserlichtquellen 1a, 1b, 1c, 1d auch die Intensitätsverteilung innerhalb jedes Lichtbandes geändert werden kann. Dazu ist anzumerken, dass es möglich ist, Laserlichtquellen mit hoher Frequenz, sei es gepulst oder kontinuierlich intensitätsmoduliert, anzusteuern, so dass in Übereinstimmung mit der jeweiligen Position des Mikrospiegels 7 beliebige Lichtverteilungen innerhalb der Lichtbänder nicht nur einstellbar sondern auch rasch änderbar sind, wenn eine besondere Gelände- oder Fahrsituation dies erfordert, beispielsweise wenn entgegenkommende Fahrzeuge oder Fußgänger durch Sensoren erfasst werden und dementsprechend eine entsprechende Änderung der Geometrie und/oder Intensität Fahrbahnausleuchtung 11' erwünscht ist.

Fig. 1a und Fig. 1b zeigen schematisch weitere Möglichkeiten der Ansteuerung bzw. Ausleuchtung der Leuchtfläche mit vier bzw. fünf aufgefächerten Laserstrahlen. In Fig. 1a ist dargestellt, dass das mittlere horizontale Leuchtband in zwei nebeneinander liegende Leuchtbänder 10ba und 10bb geteilt werden kann, sodass man übereinander und nebeneinander liegende Leuchtbänder erhält. Hier wäre beispielsweise das Abblendlicht aus zwei Streifen von zwei Lichtquellen gebildet.

Andererseits ist es, wie Fig. 1b illustriert, auch möglich, das Leuchtbild aus nebeneinander liegenden Leuchtbändern 101 ... 105 zusammenzusetzen, wenn der Spiegel 7 entsprechend schwingt.

Zur Abbildung gezielter Punkte oder Streifen, die in ihrer horizontalen Ausdehnung steuerbar sind, können die Laserlichtquellen, abhängig von der aktuellen Position des Spiegels gepulst angesteuert werden. Um zum Beispiel zu erreichen, dass Licht nur von 0° bis + 10° aus dem optischen System austritt, wird der entsprechende Laser bei einer diesem Bereich entsprechenden Winkelstellung des Mikrospiegels von abgeschaltet und Licht somit nur im Bereich von 0° bis + 10° abgestrahlt.

Verglichen mit herkömmlichen AFS-Systemen bieten das Verfahren und der Scheinwerfer nach der Erfindung den Vorteil, eine horizontal sehr hohe, theoretisch unendliche Auflösung zu ermöglichen, da wegen der analogen Schwingung des Mikrospiegels die Lichtquelle zu jedem Zeitpunkt wirkungsvoll eingeschaltet werden kann. Auch entstehen durch die scharfe Abgrenzung des ausgeblendeten Bereiches eines beleuchteten Objekts geringe Streulichtwerte, was eine sehr gute Darstellung dieses Bereiches möglich macht.

Im Vergleich zu bekannten Lösungen, bei welcher ein Mikrospiegel um zwei Achsen schwingt ergibt sich eine merkliche Verringerung der Komplexität der Spiegel- und Laseransteuerung. Bei den bekannten Lösungen sind nämlich Schwingfrequenzen des Spiegels von ca. 250 Hz in x-Richtung und von etwa 10 kHz in y-Richtung erforderlich, um ein für das Auge flimmerfreies Bild zu erzeugen. Geht man davon aus, dass in der Praxis eine Auflösung von 200 Pixel notwendig ist, so werden Pulsfrequenzen des Lasers von bis zu 2 MHz nötig, was erhebliche Schwierigkeiten hinsichtlich des EMV-Verhaltens des Systems verursachen kann und Leitungslängen sowie Leitungsführung mit hohem Aufwand unter dem Gesichtspunkt von HF-Leitungen entworfen werden müssen.

## Patentansprüche

1. Verfahren zum Erzeugen einer vorgegebenen Lichtverteilung mit Hilfe eines KFZ-Scheinwerfers auf einer Fahrbahn (13), bei welchem zumindest ein modulierter Laserstrahl (2a ... 2d) über einen verschwenkbaren Mikrospiegel (7) auf ein Lichtkonversionsmittel (8) gelenkt wird und das an dem Lichtkonversionsmittel erzeugte Leuchtbild auf die Fahrbahn projiziert wird,
**dadurch gekennzeichnet, dass**
die Laserstrahlen (2a ... 2d) zumindest zweier Laserlichtquellen (1a ... 1d) mit vorgegebenem Strahlquerschnitt über den um eine Achse schwingenden Mikrospiegel (7) zur Erzeugung von zumindest zwei an dem Lichtkonversionsmittel (8) aneinander liegender Lichtbänder (10a ... 10d) zu dem Lichtkonversionsmittel gelenkt werden.

2. Verfahren nach Anspruch 1, **dadurch gekennzeichnet, dass** der Laserstrahl (2a, 2b) zumindest einer Laserlichtquelle (1a, 1b) zu einem Strahlenband aufgefächert wird.

3. Verfahren nach Anspruch 1 oder 2, **dadurch gekennzeichnet, dass** der Abstand der Lichtbänder (10a ... 10d) voneinander durch den gegenseitigen Winkel der Laserstrahlen (2a ... 2d) der zumindest zwei Laserlichtquellen (1a ... 1d) und/oder durch die Schwingungsamplitude des Mikrospiegels (7) festgelegt ist.

4. Verfahren nach einem der Ansprüche 1, 2 oder 3, **dadurch gekennzeichnet, dass** die Länge der Lichtbänder (10a ... 10d) über die Schwingungsamplitude des Mikrospiegels (7) eingestellt wird.

5. Verfahren nach einem der Ansprüche 1 bis 4, **dadurch gekennzeichnet, dass** durch Strahlformungsoptiken (5a, 5b) und/oder die Wahl des Abstands des Lichtkonversionsmittels (8) von den Brennpunkten dieser Optiken Form und Größe der auf der Leuchtfläche erzeugten Projektionen (6a' ... 6d') bestimmt wird.

6. Scheinwerfer für Kraftfahrzeuge mit zumindest einer modulierbaren Laserlichtquelle (1a, 1b, 1c, 1d), deren Laserstrahl (2a ... 2d) über einen verschwenkbaren, von einer Spiegelansteuerung (9) angesteuerten Mikrospiegel (7) auf ein Lichtkonversionsmittel (8) gelenkt wird und mit einem Projektionssystem (12) zur Projektion des an dem Lichtkonversionsmittel erzeugten Leuchtbildes auf die Fahrbahn (13),
wobei zumindest zwei Laserlichtquellen (1a, 1b, 1c, 1d) vorgesehen sind, welchen eine Laseransteuerung (3) zum Modulieren der Strahlintensität zugeordnet ist,
und wobei zwischen jeder Laserlichtquelle und dem Mikrospiegel (7) eine Optik (5a, 5b, 5c, 5d) zur Formung je eines Laserstrahls (6a, 6b, 6c, 6d) mit vorgegebenem Strahlquerschnitt angeordnet ist,
**dadurch gekennzeichnet, dass**
der Mikrospiegel mit fester Frequenz um eine Achse schwingt, wobei die Strahlen der zumindest zwei Laserlichtquellen zur Bildung zumindest zweier aneinander liegender Lichtbänder (10a ... 10d; 10ba, 10bb, 10c; 10₁ ... 10₅) an dem Lichtkonversionsmittel (8) über den Mikrospiegel umgelenkt sind,
wobei der Abstand der Lichtbänder voneinander durch den gegenseitigen Winkel der geformten Laserstrahlen (6a ... 6d) der zumindest zwei Laserlichtquellen festgelegt, die Länge der Lichtbänder an dem Lichtkonversionsmittel durch die Schwingungsamplitude des Mikrospiegels und die Breite der Lichtbänder durch den Strahlquerschnitt bestimmt ist.

7. Scheinwerfer nach Anspruch 6, **dadurch gekennzeichnet, dass** die Lichtbänder (10a, 10b, 10c, 10d) unmittelbar, ohne Abstand aneinander anschließen.

8. Scheinwerfer nach Anspruch 6 oder 7, **dadurch gekennzeichnet, dass** der Mikrospiegel (7) über die Spiegelansteuerung (9) mit seiner mechanischen Eigenfrequenz angesteuert wird.

9. Scheinwerfer nach einem der Ansprüche 6 bis 8, **dadurch gekennzeichnet, dass** die Verschwenkamplitude des Mikrospiegels (7) über die Spiegelansteuerung änderbar ist.

10. Scheinwerfer nach einem der Ansprüche 6 bis 9, **dadurch gekennzeichnet, dass** die Strahlen der zumindest zwei Laserlichtquellen zur Bildung zumindest zweier übereinander liegender horizontaler Lichtbänder (10a, 10b, 10c, 10d) an dem Lichtkonversionsmittel (8) über den Mikrospiegel (7) umgelenkt sind.

11. Scheinwerfer nach Anspruch 10, **dadurch gekennzeichnet, dass** drei Laserlichtquellen (1a, 1b, 1c) zur Bildung von drei übereinander liegenden Lichtbändern (10a, 10ab, 10bb, 10c) auf an dem Lichtkonversionsmittel (8) vorgesehen sind, wobei die auf die Fahrbahn projizierten Lichtbänder des Leuchtbildes einem Fernlicht, der Hell-Dunkel-Grenze und einem Abblendlicht entsprechen.

12. Scheinwerfer nach Anspruch 11, **dadurch gekennzeichnet, dass** die Lichtbänder (10a, 10ab, 10bb, 10c) unterschiedliche Höhe aufweisen.

## Claims

1. A process for producing a specified light pattern on a road (13) using a motor vehicle headlight, wherein at least one modulated laser beam (2a ... 2d) is directed onto a means of light conversion (8) through a pivoting micromirror, (7) and the light image produced on the means of light conversion is projected onto the road,
**characterized in that**
the laser beams (2a ... 2d) of at least two laser light sources (1a ... 1d) with a specified beam cross section are directed, through the micromirror (7) oscillating about an axis, onto the means of light conversion to produce at least two light bands (10a ... 10d) lying next to one another on the means of light conversion (8).

2. The process described in claim 1, **characterized in that** the laser beam (2a, 2b) of at least one laser light source (1a, 1b) is fanned out into a beam band.

3. The process described in claim 1 or 2, **characterized in that** the distance of the light bands (10a ... 10d) from one another is determined by the angle between the laser beams (2a ... 2d) of the at least two laser light sources (1a ... 1d) and/or by the oscillation amplitude of the micromirror (7).

4. The process described in one of claims 1, 2, or 3, **characterized in that** the length of the light bands (10a ... 10d) is adjusted through the oscillation amplitude of the micromirror (7).

5. The process described in one of claims 1 through 4, **characterized in that** the shape and size of the projections (6a' ... 6d') produced on the emitting surface are determined by the beamforming optics (5a, 5b) and/or the choice of the distance of the means of light conversion (8) from the focal points of these optics.

6. A motor vehicle headlight with at least one modulable laser light source (1a, 1b, 1c, 1d), whose laser beam (2a ... 2d) is directed onto a means of light conversion (8) through a pivoting micromirror (7) controlled by a mirror control (9), and with a projection system (12) to project the light image produced by the means of light conversion onto the road (13), wherein at least two laser light sources (1a, 1b, 1c, 1d) are provided, which have a laser control (3) assigned to them to modulate the beam intensity,
and wherein each laser light source and the micromirror (7) have optics (5a, 5b, 5c, 5d) arranged between them, each forming a laser beam (6a, 6b, 6c, 6d) with a specified beam cross section,
**characterized in that**
the micromirror oscillates about an axis at a fixed frequency, the beams of the at least two laser light sources being reflected through the micromirror to form at least two light bands (10a ... 10d; 10ba, 10bb, 10c; 10₁ ... 10₅) lying next to one another on the means of light conversion (8),
the distance of the light bands from one another being determined by the angle between the formed laser beams (6a ... 6d) of the at least two laser light sources, the length of the light bands on the means of light conversion being determined by the oscillation amplitude of the micromirror, and the width of the light bands being determined by the beam cross section.

7. The headlight described in claim 6, **characterized in that** the light bands (10a, 10b, 10c, 10d) lie directly against one another, without any separation.

8. The headlight described in claim 6 or 7, **characterized in that** the micromirror (7) is controlled through the mirror control (9) with its mechanical natural frequency.

9. The headlight described in one of claims 6 through 8, **characterized in that** the horizontal swing amplitude of the micromirror (7) can be changed through the mirror control.

10. The headlight described in one of claims 6 through 9, **characterized in that** the beams of the at least two laser light sources are reflected through the micromirror (7) to form at least two horizontal light bands (10a, 10b, 10c, 10d) lying on top of one another on the means of light conversion (8).

11. The headlight described in claim 10, **characterized in that** three laser light sources (1a,1b, 1c) are provided to form three light bands (10a, 10ab, 10bb, 10c) lying on top of one another on the means of light conversion (8), the light bands of the emitting surface projected onto the road corresponding to high beams, the light / dark boundary, and low beams.

12. The headlight described in claim 11, **characterized in that** the light bands (10a, 10ab, 10bb, 10c) have different heights.

## Revendications

1. Procédé pour produire un motif lumineux spécifié sur une voie de circulation (13) à l'aide d'un phare de véhicule automobile, dans lequel au moins un faisceau laser modulé (2a ... 2d) est dirigé sur un moyen de conversion de lumière (8) par un micro-miroir pivotant (7) et l'image lumineuse produite sur le moyen de conversion de lumière est projetée sur la voie de circulation,
**caractérisé par le fait que**
les faisceaux laser (2a ... 2d) d'au moins deux sources de lumière laser (1a ... 1d) ayant une section transversale de faisceau spécifiée sont dirigés, par le micro-miroir (7) oscillant autour d'un axe, sur le moyen de conversion de lumière pour produire au moins deux bandes lumineuses (10a ... 10d) s'étendant l'une près de l'autre sur le moyen de conversion de lumière (8).

2. Procédé selon la revendication 1, **caractérisé par le fait que** le faisceau laser (2a, 2b) d'au moins une source de lumière laser (1a, 1b) est distribué en éventail en une bande de faisceau.

3. Procédé selon l'une des revendication 1 ou 2, **caractérisé par le fait que** la distance des deux bandes lumineuses (10a ... 10d) l'une par rapport à l'autre est déterminée par l'angle entre les faisceaux laser (2a ... 2d) des au moins deux sources de lumière laser (1a ... 1b) et/ou par l'amplitude d'oscillation du micro-miroir (7).

4. Procédé selon l'une des revendications 1, 2 ou 3, **caractérisé par le fait que** la longueur des bandes lumineuses (10a ... 10d) est ajustée par l'amplitude d'oscillation du micro-miroir (7).

5. Procédé selon l'une des revendications 1 à 4, **caractérisé par le fait qu'**une forme et une dimension des projections (6a' ... 6d') produites sur la surface d'émission sont déterminées par des optiques de formation de faisceau (5a, 5b) et/ou le choix de la distance du moyen de conversion de lumière (8) à partir des points focaux de ces optiques.

6. Phare pour véhicules automobiles comportant au moins une source de lumière laser (1a, 1b, 1c, 1d) modulable, dont le faisceau laser (2a ... 2d) est dirigé sur un moyen de conversion de lumière (8) par un micro-miroir (7) pivotant, commandé par une commande de miroir (9), et un système de projection (12) pour projeter sur une voie de circulation (13) une image lumineuse produite sur le moyen de conversion de lumière,
au moins deux sources de lumière laser (1a, 1b, 1c, 1d) étant prévues, auxquelles est attribuée une commande laser (3) pour moduler l'intensité de faisceau,
et entre chaque source de lumière laser et le micro-miroir (7) est disposée une optique (5a, 5b, 5c, 5d) pour former à chaque fois un faisceau laser (6a, 6b, 6c, 6d) ayant une section transversale de faisceau spécifiée,
**caractérisé par le fait que** le micro-miroir oscille autour d'un axe à une fréquence fixe, les faisceaux des au moins deux sources de lumière laser étant déviés par le micro-miroir pour former au moins deux bandes lumineuses (10a ... 10d ; 10ba, 10bb, 10c ; 10₁ ... 10₅) s'étendant l'une à côté de l'autre sur le moyen de conversion de lumière (8),
la distance des bandes lumineuses l'une par rapport à l'autre étant déterminée par l'angle entre les faisceaux laser formés (6a ... 6d) des au moins deux sources de lumière laser, la longueur des bandes lumineuses sur le moyen de conversion de lumière étant déterminée par l'amplitude d'oscillation du micro-miroir, et la largeur des bandes lumineuses étant déterminée par la section transversale de faisceau.

7. Phare selon la revendication 6, **caractérisé par le fait que** les bandes lumineuses (10a, 10b, 10c, 10d) s'étendent directement l'une contre l'autre, sans une quelconque séparation.

8. Phare selon l'une des revendications 6 ou 7, **caractérisé par le fait que** le micro-miroir (7) est commandé par la commande de miroir (9) avec sa fréquence naturelle mécanique.

9. Phare selon l'une des revendications 6 à 8, **caractérisé par le fait que** l'amplitude d'oscillation du micro-miroir (7) est apte à être changée par la commande de miroir.

10. Phare selon l'une des revendications 6 à 9, **caractérisé par le fait que** les faisceaux des au moins deux sources de lumière laser sont déviés par le micro-miroir (7) pour former au moins deux bandes lumineuses (10a, 10b, 10c, 10d), horizontales, s'étendant l'une au-dessus de l'autre sur le moyen de conversion de lumière (8).

11. Phare selon la revendication 10, **caractérisé par le fait que** trois sources de lumière laser (1a, 1b, 1c) sont prévus pour former trois bandes lumineuses (10a, 10ab, 10bb, 10c) s'étendant l'une au-dessus de l'autre sur le moyen de conversion de lumière (8), les bandes lumineuses de la surface d'émission projetées sur la voie de circulation correspondant au faisceau de route, à la ligne de coupure clair-sombre et au faisceau de croisement.

12. Phare selon la revendication 11, **caractérisé par le fait que** les bandes lumineuses (10a, 10ab, 10bb, 10c) ont des hauteurs différentes.
